# EUROPEAN PATENT APPLICATION

(11) **EP 1 947 850 A1**
(43) Date of publication of application: **23.07.2008**
(21) Application number: 06823317.0
(22) Date of filing: 10.11.2006
(51) Int. Cl.: H04N 5/93, H04N 5/76, H04N 5/91

(54) **VIEWER DEVICE, SLIDE SHOW DISPLAY METHOD IN VIEWER DEVICE, AND PROGRAM**

(30) Priority: 10.11.2005 JP 2005326419
(71) Applicant: MATSUSHITA ELECTRIC INDUSTRIAL CO., LTD., Osaka 571-8501 (JP)
(72) Inventor: IWAHARA, Yuji c/o Matsushita Electric Industrial Co.,Ltd., 2-1-61, Shiromi,Chuo-ku Osaka-shi, Osaka 540-6207 (JP); HORIE, Masahiro c/o Matsushita Electric Industrial Co.,Ltd., 2-1-61, Shiromi,Chuo-ku Osaka-shi, Osaka 540-6207 (JP)
(74) Representative: Grünecker, Kinkeldey, Stockmair & Schwanhäusser Anwaltssozietät
(86) International application number: PCT/JP2006/322495
(87) International publication number: WO 2007/055334

(57) **Abstract**

A viewer apparatus displays, on a display screen, a slideshow of still image data recorded on a recording medium. The viewer apparatus includes a layout determination unit 3 for allocating a display area, on the display screen, to each display-level folder located directly under a target folder, the target folder being any of folders in a hierarchical tree on the recording medium, a slideshow list generation unit 5 for selecting, as a slideshow target, still image data that belongs to one of (i) the display-level folder and (ii) a subordinate folder located below the display-level folder and a slideshow control unit 8 for executing a plurality of slideshows for the selected still image data in the display areas allocated to each of the display-level folders located above each of the still image data.

## Description

### Technical Field

The present invention relates to a viewer apparatus and particularly to an improvement of viewer function for browsing a still image recorded on a recording medium.

### Background Art

A viewer function is a function for showing a user a still image, which is recorded by a digital still camera (DSC) on a recording medium such as an SD card or the like, by displaying the still image on a monitor or the like. A conventional viewer apparatus shows a plurality of still images by a slideshow or a list display when there are a plurality of still images recorded on the recording medium.
Generally, a DSC for recording still image data records the still image based on the DCF standard (Design rule for Camera File system) . A viewer apparatus whose browse target is still image data taken by the DSC is also designed in consideration of the DCF standard.

For example, a folder structure is provided in the DCF standard so as to record still image data on a folder directly one level below "DCIM folder" (hereinafter, "DCF folder"). As such, some viewer apparatuses based on the DCF standard show still image data in a plurality of the DCF folders by displaying a slideshow successively regardless of which folder the still image data belongs to. Patent Document 1: Japanese Laid-open publication No. 2004-64396

### Disclosure of the Invention

### Problems to be solved

Semiconductor memory such as the SD card or the like used for recording still image data taken by the DSC is increasing in capacity. Therefore, it is expected that still image data will be able to be used for saving still image data taken by the DSC in the SD card without moving the still image data to a CD-R or the like.
However, the folder structure based on the DCF standard is aimed at compatibility among apparatuses. Therefore, it is hard to say that managing still image data is always easy, especially in saving a lot of still image data. For example, according to the folder structure based on the DCF standard, there are restrictions on names of the DCF folders and folders below the DCF folders cannot be organized into a hierarchy.

Therefore, it is possible that, before browsing using the viewer apparatus, a user may change the folder structure in the recording medium on which the still image data are recorded using a PC or the like, for the purpose of making file management easy. Here, if the user changes the folder structure in the recording medium to a hierarchical structure or the like that is not based on the DCF standard, a problem arises that the still image data recorded on the recording medium cannot be browsed properly using the viewer apparatus that conforms with the DCF standard.

The present invention, which arose inviewof the statedproblem, has an object of providing a viewer apparatus, slideshow display method for the viewer apparatus and a program, the viewer apparatus being capable of displaying the slideshow of the still image data, like a recording medium whose folder structure is based on the DCF standard, even when the folder structure in the recording medium is a hierarchical structure or the like that is not based on the DCF standard.

### Means to Solve Problem

In order to achieve the above object, the viewer apparatus pertaining to the present invention is a viewer apparatus that displays, on a display screen, a slideshow of a plurality of pieces of still image data below a target folder, the target folder being any of folders in a hierarchical file system in which folders and still image data are organized into a tree structure on the recording medium, the viewer apparatus comprising a display area allocation unit operable to allocate a display area, on the display screen, to each display-level folder directly one level below the target folder, a selection unit operable to select, as slideshow targets, a plurality of pieces of still image data that belong to a display-level folder and one or more subordinate folders which are one or more levels below the display-level folder, the display-level folder being present in a path of each of the subordinate folders and a slideshow control unit operable to execute, in a display area allocated to the display-level folder, a slideshow of the plurality of pieces of selected still image data.

Inorder to achieve the above object, a slide show display method pertaining to the present invention is a slideshow display method used in a viewer apparatus that displays, on a display screen, a slideshow of a plurality of pieces of still image data below a target folder, the target folder being any of folders in a hierarchical file system in which folders and still image data are organized into a tree structure on the recording medium, the slideshow display method comprising a display area allocation step of allocating a display area, on the display screen, to each display-level folder directly one level below the target folder, a selection step of selecting, as slideshow targets, a plurality of pieces of still image data that belong to a display-level folder and one or more subordinate folders which are one or more levels below the display-level folder, the display-level folder being present in a path of each of the subordinate folders and a slideshow control step of executing, in a display area allocated to the display-level folder, a slideshow of the plurality of pieces of selected still image data.

In order to achieve the above object, a computer program pertaining to the present invention is a program for displaying, on a display screen, a slideshow of a plurality of pieces of still image data below a target folder, the target folder being any of folders in a hierarchical file system in which folders and still image data are organized into a tree structure on the recording medium, the program comprising a display area allocation step of allocating a display area, on the display screen, to each display-level folder directly one level below the target folder, a selection step of selecting, as slideshow targets, a plurality of pieces of still image data that belong to a display-level folder and one or more subordinate folders which are one or more levels below the display-level folder, the display-level folder being present in a path of each of the subordinate folders and a slideshow control step of executing, in a display area allocated to the display-level folder, a slideshow of the plurality of pieces of selected still image data.

### Effect of the Invention

According to the above structure, with the viewer apparatus pertaining to the present invention, even if still image data is stored in folders which are hierarchically organized into a plurality of levels, with regard to folders, only images of a folder which is in a display level are displayed on the screen, like as with display when still image data is stored with a folder structure based on the DCF standard. However, with regard to still images, a slideshow is executed even for still images that belong to a folder below the display-level folders in display areas allocated to each of the display-level folders.

Thus, the user can browse still images that belong to a subordinate folder in the same manner as browsing still images in a display-level folder using a viewer apparatus that conforms with the DCF standard without having to make a screen transition to display a subordinate folder or having to enlarge each still image.
Also, when two or more slideshows are executed in two or more display areas, the execution of the slideshow may be performed such that (i) timing that still image data in one slideshow is switched and (ii) timing that still image data in another slideshow is switched do not coincide.

Thus, even when slideshows of a plurality of display-level folders are executed on the display screen concurrently, timing of switching still image in each slideshow executed in the display areas allocated to each of the display-level folders does not coincide. This makes it easier for the user to keep an eye on each of the slideshows relating to the display-level folders in order, and thus the user is prevented from overlooking still images.

Also, the slideshow control unit may control so as to start the slideshow in the display area allocated to the display-level folder after a slideshow in another display area allocated to another display-level folder on the display screen is completed.
Thus, even if display areas are allocated to a plurality of display-level folders on the display screen, only one slideshow is executed on the display screen. Therefore, the user does not have to keep an eye on the plurality of slideshows displayed concurrently, and thus the user is prevented from overlooking still images.

Also, the viewer apparatus pertaining to the present invention may further comprise a calculation unit operable to calculate a difference in image-taking time between two pieces of still image data that belong to a same folder and an excluding unit operable, when the calculated difference is less than a predetermined value, to exclude one of the two pieces of the still image data from the slideshow target.
Thus, when two pieces of still image data whose image-taking time (the time at which the image was taken) is close to one another exist in the same folder, a slideshow is executed with one of the two pieces of still image data excluded from the target.

Thus, images whose image-taking time is directly consecutive to another piece of still image data are excluded and images for the slideshow are narrowed down. Therefore, the user can confirm the desired still image data even more rapidly.
Also, the viewer apparatus pertaining to the present invention may further comprise a calculation unit operable to calculate a difference in characteristic amount between two pieces of still image data that belong to a same folder, the characteristic amount being determined according to image patterns of each of the two pieces of the still image data and an excluding unit operable, when the calculated difference is less than a predetermined value, to exclude one of the two pieces of the still image data from the slideshow target.

Thus, when two pieces of still image data whose image patterns are similar to one another exist in the same folder, a slideshow is executed with one piece of the still image data excluded from the target.
Therefore, images that have been taken in a sequential shooting mode or the like are excluded and images for a slideshow are narrowed down. Therefore, the user can confirm the desired still image data even more rapidly.

Also, the viewer apparatus pertaining to the present invention may further include an excluding unit operable to exclude, from the slideshow target, still image data that does not satisfy a predetermined condition, based on meta-information attached to the still image data.
According to a lot of DSCs, still image data taken is recorded with meta-information such as Exif (Exchange Image File Format) information or the like attached. According to the above structure, only the still image data with a predetermined condition (e.g. only still image data taken on a specified date or within a specified periodoftime) ismadeatargetforaslideshow. Here, the predetermined condition is set with reference to the meta-information. As a result, the user can search for the desired image even more easily by setting a predetermined condition from memory.

Also, the viewer apparatus pertaining to the present invention may further include an excluding unit operable to exclude, from the slideshow target, still image data not specified as a print target in print specification information recorded on the recording medium.
As a simple and easy method of controlling printing of still image data taken by the DSC, the DPOF (Digital Print Order Format) is used. Here, the DPOF records, on a recording medium, specifications such as which image is to be printed, the number of images that are to be printed and the like. Still image data specified as a printing target using print specification information such as the DPOF or the like are expected to have been focused on by the user. Therefore, it is possible that the user desires to browse that still image data.

Consequently, according to the above structure, only the still image data specified as a print target with reference to the print specification information is made a target for a slideshow. Therefore, the user can browse the desired images even more easily.
Also, the viewer apparatus pertaining to the present invention may further include an excluding unit operable to exclude, from the slideshow target, still image data that belongs to a folder in which a file does not exist that composes a DCF object together with the still image data.

The DCF standard defines that a piece of still image data and a file whose file name differs only in terms of the extension from the file name of the piece of still image data together compose a DCF obj ect. Still image data recorded on the recording medium together with data such as reduced images and audio that composes the above DCF object is anticipated to have been focused on by the user more than still image data which alone is simply recorded on the recording medium. Therefore, it is possible that the user desires to browse the above still image data.

Consequently, according to the above structure, only still image data that composes a DCF object is made a target for a slideshow. Therefore, the user can browse the desired image even more easily.
Also, the viewer apparatus pertaining to the present invention may further include an excluding unit operable to exclude, from the slideshow target, of a plurality of pieces of still image data that belong to a same folder, still image data other than still image data whose image-taking time is earliest.

Even when the still image is simply recorded according to the DSC, or the user changes the folder structure in the recording medium for the purpose of making the file management easy, it is expected that still image data taken at the same period of time and related still image data are recorded in the same folder. Therefore, it is often possible to analogize what kind of still image data is included in the same folder only by having a look at one still image.

Consequently, according to the above structure, still images that belong to the same folder are excluded and images for a slideshow are narrowed down. Therefore, the user can confirm the still image data even more rapidly.
Also, the viewer apparatus pertaining to the present invention may further include an excluding unit operable to exclude, from the slideshow target, of a plurality of pieces of still image data that belong to a same folder, still image data other than still image data which is specified by a user.

Thus, an image other than a still image specified by the user is excluded and images for a slideshow are narrowed down. Therefore, the user can confirm still image data even more rapidly.
Also, the viewer apparatus pertaining to the present invention may further comprise a reception unit operable to receive selection operation from a user during the execution of the slideshow by the slideshow control unit and a target folder change unit operable to set, as a new target folder, a folder to which still image data belongs that is displayed in the slideshows at the time of receiving the selection operation, wherein the display area allocation unit, the selection unit and the slideshow control unit execute, when the target folder is changed, for the new target folder, allocation of the display area to each display-level folder, selection of the slideshow targets, and the slideshow, respectively.

Thus, a folder to which the specified still image data belongs can be selected as a new target folder with one selection operation. In the display areas allocated to the display-level folders, the slideshow of still image data located one or more levels below the current display-level folder is displayed. Therefore, the user can specify still image data on an arbitrary level by one selection operation.

Accordingly, when specifying a folder located two or more levels below a current display-level folder as a new target folder, unlike a conventional structure, the user is saved from having tomake repeated transitions to follow a folder tree in order to select the new target folder in a deep level.
Also, the viewer apparatus pertaining to the present invention may further comprise a reception unit operable to receive selection operation from a user during the execution of the slideshow performed by the slideshow control unit and a full screen slideshow control unit operable (i) to select a folder to which a piece of still image data belong that is displayed in the slideshows at the time of receiving the selection operation and (ii) to execute, on the whole display screen, a slideshow of a plurality of pieces of still image data that belong to the selected folder.

Thus, when the user wants to browse still image data that belongs to a folder located two or more levels below a current display-level folder, unlike a conventional structure, the user is saved from having to make repeated transitions to follow a folder tree in order to select a desired folder in a deep level. Also, the slideshow of still image data that belongs to the desired folder can be displayed with one selection operation.
Also, the viewer apparatus pertaining to the present invention may further include a reception unit operable to receive, of the display-level folders, at least one selection of the display-level folder if the slideshow area allocation unit allocates display areas to a plurality of display-level folders, wherein the slideshow control unit executes the slideshows in the display areas allocated to the selected display-level folders.

Thus, even if display areas are allocated to a plurality of display-level folders on the display screen, the user can selectively browse still image data that belongs to the desired display-level folder.
Also, the slideshow control unit may further determine display time per image for the slideshow in a display area allocated to a predetermined display-level folder in accordance with a number of pieces of still image data to be the slideshow targets in the display area.

In the case of executing the slideshows of the plurality of display-level folders on the display screen concurrently, it is possible that the user cannot pay attention to all of the displayed slideshows at once. Therefore, the slideshow executed concurrently is sometimes controlled to display repeatedly from the first still image after cycling through the still images.
However, the user does not always pay attention to only one slideshow. The user sometimes keeps an eye on only two or three of displayed slideshows. In this case, if there is difference in time taken to cycle through the images between a plurality of displayed slideshows, there is a possibility that some images might be viewed more than once if images in a folder canbe cycled through in a relatively short period of time, and some images might be overlooked if images in a folder can be cycled through in a relatively long period of time.

According to the above structure, it is possible to synchronize time taken to cycle through images between a plurality of slideshows displayed by making adjustments such as decreasing the display time per image when the number of pieces of still image data for a slideshow is large, increasing the display time per image when the number of pieces of still image data for the slideshow is small and the like.
Accordingly, in the case of executing slideshows of a plurality of display-level folders concurrently, it is possible to browse still image data efficiently without viewing some images in a slideshow more than once or overlooking some images in the slideshow.

### Brief Description of the Drawings

FIG. 1 is an illustration showing a usage act of a viewer apparatus pertaining to the present invention;
FIG. 2 is a block diagram showing one example of a folder structure generated based on the DCF standard by a DSC 200;
FIG . 3 shows one example of a folder structure after being changed in a PC 300;
FIG.4 shows a hardware structure of a recording playback apparatus 100;
FIG. 5 shows a software structure pertaining to a viewer function among function blocks that are realized in a control unit 118;
FIG.6 shows a display example of a slideshow pertaining to the embodiments;
FIG.7 shows one example of slideshow list information;
FIG.8 shows a display image of a excluding method setting display;
FIG. 9 is a flowchart showing a processing procedure of a control unit 118;
FIG.10 is a flowchart showing a processing procedure of a slideshow list information generation process;
FIG.11 is a flowchart showing a processing procedure of a excluding process that excludes an image other than a folder representative image;

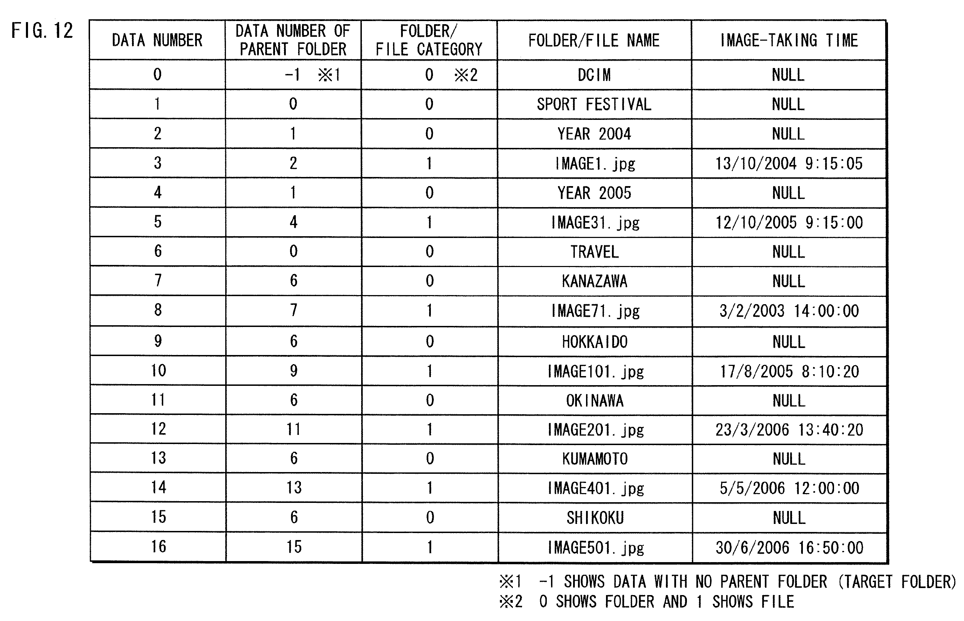

FIG.12 shows one example of slideshow list information in displaying a slideshow of the representative image;
FIG.13 is an illustration showing a display example of the slideshow of the representative images;
FIG.14 is a flowchart showing a processing procedure of a excluding process based on image-taking time;
FIG.15 schematically shows a excluding process based on image-taking time;
FIG.16 is a flowchart showing a processing procedure of a excluding process based on an image characteristic amount;
FIG.17 schematically shows a excluding process based on an image characteristic amount;
FIG.18 is a flowchart showing a processing procedure of an excluding process using Exif information;
FIG.19 is a flowchart showing a processing procedure of an excluding process using DPOF information;
FIG.20 is a flowchart showing a processing procedure of an excluding process based on whether or not a file exists that composes a DCF object;
FIG.21 is a flowchart showing a processing procedure of a slideshow display process;
FIG.22 is a flowchart showing a modification of a slideshow display process that executes a slideshow of only a folder that has been focused on;
FIG.23 shows a display example in executing a slideshow of only a folder that has been focused on;
FIG.24 is a flowchart showing a processing procedure of a modification of a slideshow display process; and
FIG.25 is a flowchart showing a processing procedure of a modification that determines display time per image in accordance with the number of pieces of still image data to be displayed as a slideshow.

### Descriptions of references

- 100: recording playback apparatus
- 200: DSC
- 300: PC
- 400: SD card
- 500: monitor
- 600: antenna
- 700: disc
- 1: screen display unit
- 2: input judging unit
- 3: layout determination unit
- 4: exclusion setting unit
- 5: slideshow list generation unit
- 6: folder/file information acquisition unit
- 7: slideshow list storage unit
- 8: slideshow control unit
- 9: still image data read unit
- 10: still image decoder
- 11: selection folder determination unit

### Best Mode for Carrying Out the Invention

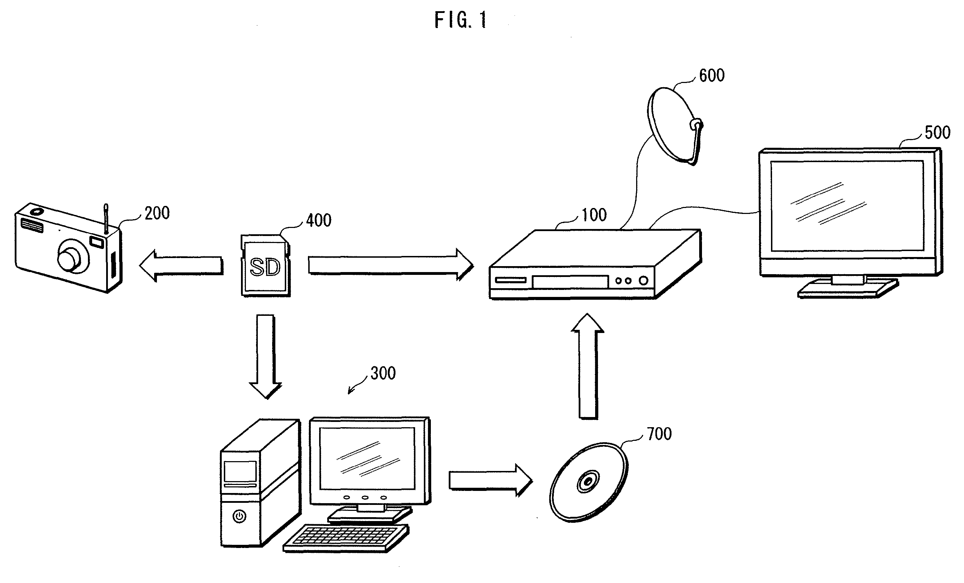

Hereinafter, an embodiment of the viewer apparatus pertaining to the present invention is described. Tobeginwith, of implementation acts of the viewer apparatus pertaining to the present invention, a form of a usage act is described. FIG.1 is an illustration showing the form of usage acts of the viewer apparatus pertaining to the present invention. In FIG. 1, the viewer apparatus pertaining to the present invention is implemented as one function of a recording playback apparatus 100. The recording playback apparatus 100 is connected to a monitor 500 and an antenna 600. Also, the recording playback apparatus 100 is able to record, on a recording medium, video and audio obtained from a radio wave received by the antenna 600 and to play back the recorded video on the monitor 500. Furthermore, the recording playback apparatus 100 is used, as a viewer apparatus, for reading still image data recorded on a disc 700 or an SD card 400 and for displaying a slideshow on the screen of the monitor 500.

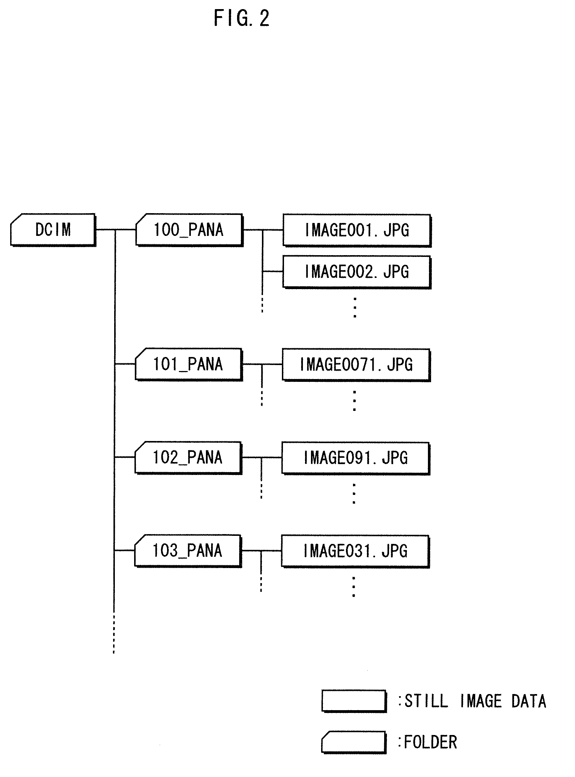

In the present embodiment, the still image data is recorded by a DSC (digital still camera) 200. As shown in FIG.2, the still image data is recorded on any one of DCF folders (of 100_PANA, 101_PANA, 103_PANA and so on) at the time of being taken and recorded by the DSC 200, the DCF folder being based on the DCF standard and existing directly under the DCIM folder.
The recording playback apparatus 100 pertaining to the present embodiment can select, as a slideshow target, still image data recorded on the SD card 400 as it is. Also, the recording playback apparatus 100 can use still image data which has been moved to a disc 700 for the slideshow.

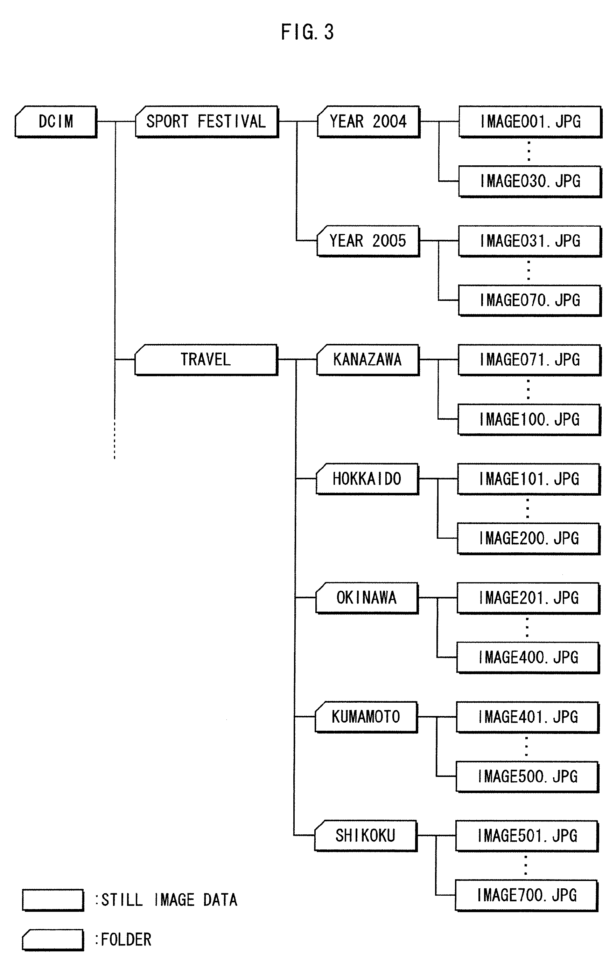

Specifically, the SD card 400 is mounted in the SD card slot of a PC 300 after the shooting using DSC 200. Then the PC 300 records the still image data stored on the SD card 400 to the disc 700. The folder structure of the disc 700 does not necessarily have to be based on the DCF standard and has an advantage of making data management by a user easy. In the present embodiment, the still image data is saved in the disc 700, as shown in FIG.3, with a folder structure not based on the DCF standard.

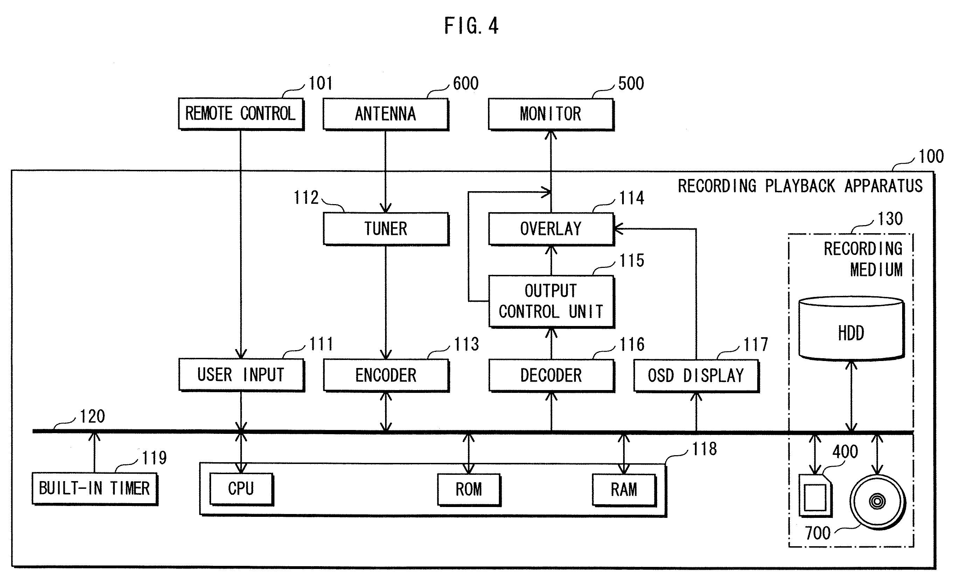

In the following description, the disc 700 to which still image data has been copied from the SD card 400 via the PC 300 is mounted in the recording playback medium 100. This concludes the description of the usage behavior of the viewer apparatus pertaining to the present invention.
Hereinafter, the recording playback medium 100 is described. FIG. 4 is a block diagram showing a hardware structure of the recording playback apparatus 100.

The recording playback apparatus 100 pertaining to the present invention is produced industrially based on an internal structure shown in FIG. 4. The recording playback apparatus 100 pertaining to the present invention can be produced industrially mainly by implementing a system LSI on a cabinet and a board of the apparatus. The system LSI is an integrated circuit in which various processing units are integrated, the processing units performing functions of the recordingplayback apparatus 100. The recordingplayback apparatus 100, which is produced in such way, is composed of a user input unit 111, a tuner 112, an encoder 113, an overlay 114, an output control unit 115, a decoder 116, an OSD display unit 117, a control unit 118, a built-in timer 119, a bus 120 and a recording medium 130.

The tuner 112 of the recording playback apparatus selects a target channel from a radio wave received by the antenna 600 and then outputs the video and audio signals of the channel to the encoder 113. The encoder 113 encodes the received video and audio signals in a predetermined recording format. Then the encoded data is recorded in the HDD of the recording medium 130. The decoder 116 decodes the encoded data read from the HDD of the recording medium 130 and outputs the decoded video data to the overlay 114 via the output control unit 115. Also, the OSD display unit 117 creates OSD display data showing an operation setting and state of the recording playback apparatus. The overlay 114 generates a video signal of a predetermined display format which is a composite of the resultant video data from the decoder 116 with the resultant OSD display data from the OSD display unit 117. Then, the video signal generated by the overlay 114 is displayed on the monitor 500.

A remote control 101, for example, is used by a user to give, to the recording playback medium 100, instruction to watch the video displayed on the monitor 500 and other instructions. When the user inputs the instruction using the remote control 101, the user input unit 111 receives the input from the remote control 101 and then transmits the content of the input to the control unit 118.
The control unit 118 controls data transfer performed through the bus 120 and a variety of processes performed in the recording playback medium 100. On ROM are recorded programs. A CPU operates in accordance with this program, using a RAM 133 and the built-in timer 119.

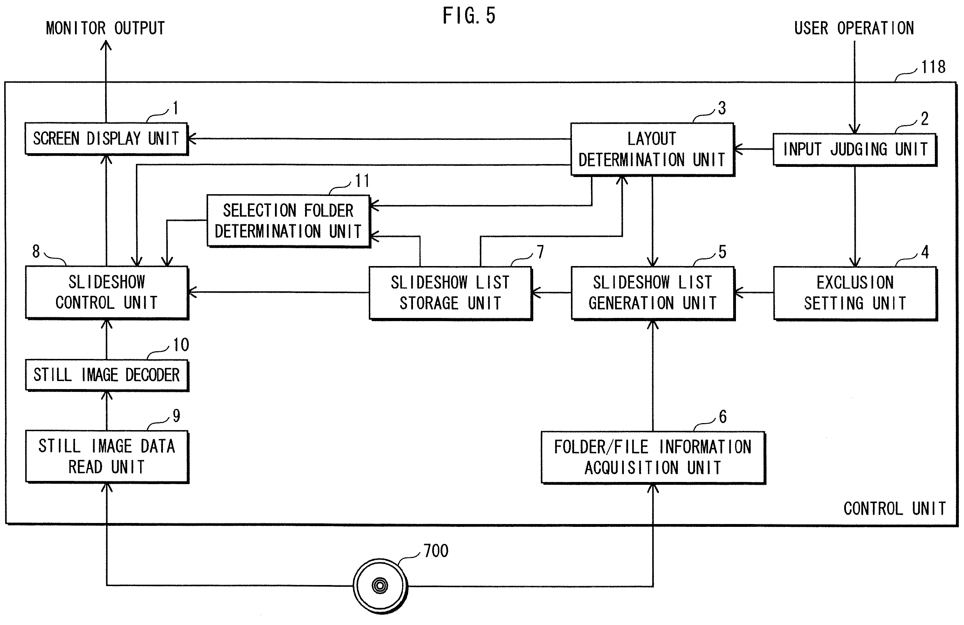

The programs recorded on the ROM include a program that realizes the viewer function pertaining to the present invention. The program is read by the CPU and then the program and a hardware resource work together, which allows the control unit 118 to realize the function as the viewer apparatus pertaining to the present invention.
Hereinafter, a structure relating to the viewer apparatus realized in the control unit 118 is described. FIG.5 shows, among functionblocks that canbe realized in the control unit 118, a structure relating to the viewer function.

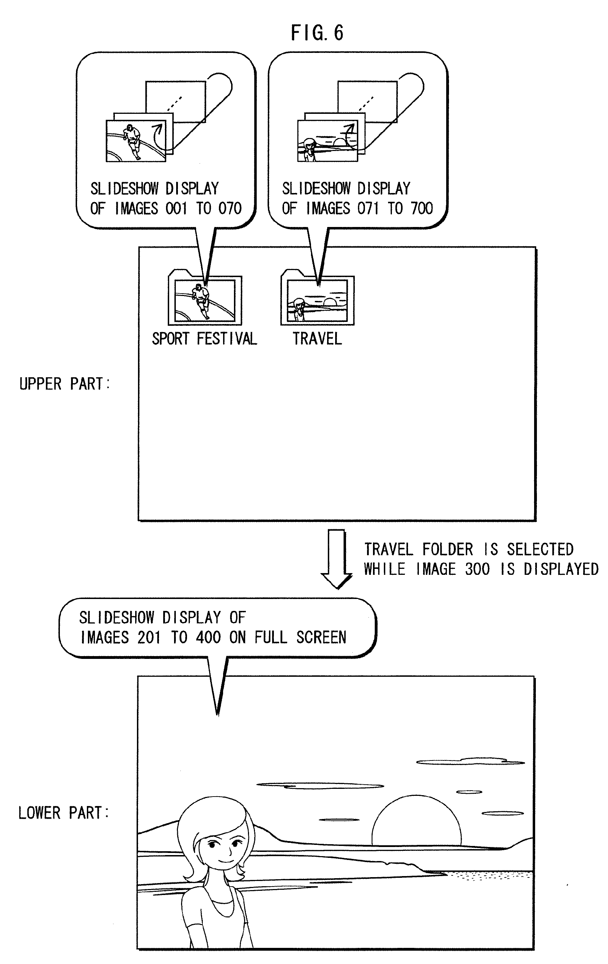

A screen display unit 1 generates a video signal to be outputted to the monitor 500.
An input judging unit 2 receives, from the user input unit 111, a selection instruction or a focus move instruction made according to a user operation. Then the input judging unit 2 notifies a layout determination unit 3.
The layout determination unit 3 has a slideshow list generation unit 5 generate or update slideshow list information, every time a target folder is selected by the selection instruction. The layout determination unit 3 allocates display areas, when the slideshow list information is updated, on a display screen, to each folder that is shown to be located directly one level under the target folder by the slideshow list information (hereinafter, "display-level folder"). Then, the layout determination unit 3 has the screen display unit 1 display the GUI (graphical user interface). For example, if the "DCIM folder" is selected as a target folder in a folder tree shown in FIG.2, the layout determination unit 3 allocates display areas toa "sport festival folder" anda "travel folder" (display-level folders) and then displays the GUI as shown in an upper part in FIG. 6.

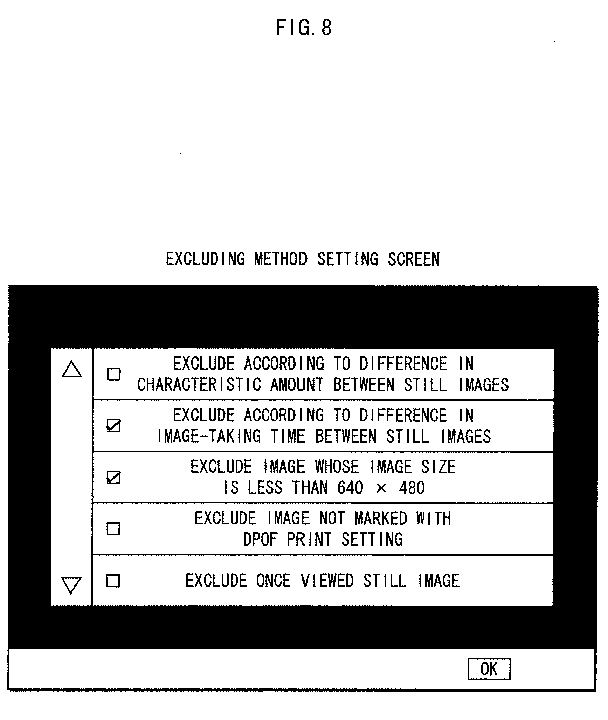

When the GUI display of the display-level folder has been completed, the layout determination unit 3 notifies a slideshow control unit 8 of the display areas which have been allocated to each display-level folder and then give an instruction to execute a slideshow.
A exclusion setting unit 4 displays the GUI of a excluding method setting screen shown in FIG.8. Then the exclusion setting unit 4 receives a condition of still image data to be excluded from slideshow list information in generating the slideshow list information.

The slideshow list generation unit 5 detects, when a selection change in the target folder is notified from the layout determination unit 3, a folder and still image data located below the target folder from the recording medium 130. Then, the slideshow list generation unit 5 generates "slideshow list information" that shows which folder each of the detected folders and each still image data belong to. The slideshow list information has, for each folder and still image data, information such as a data number, the data number of the parent folder, a folder/file category, a folder/file name and an image-taking time.

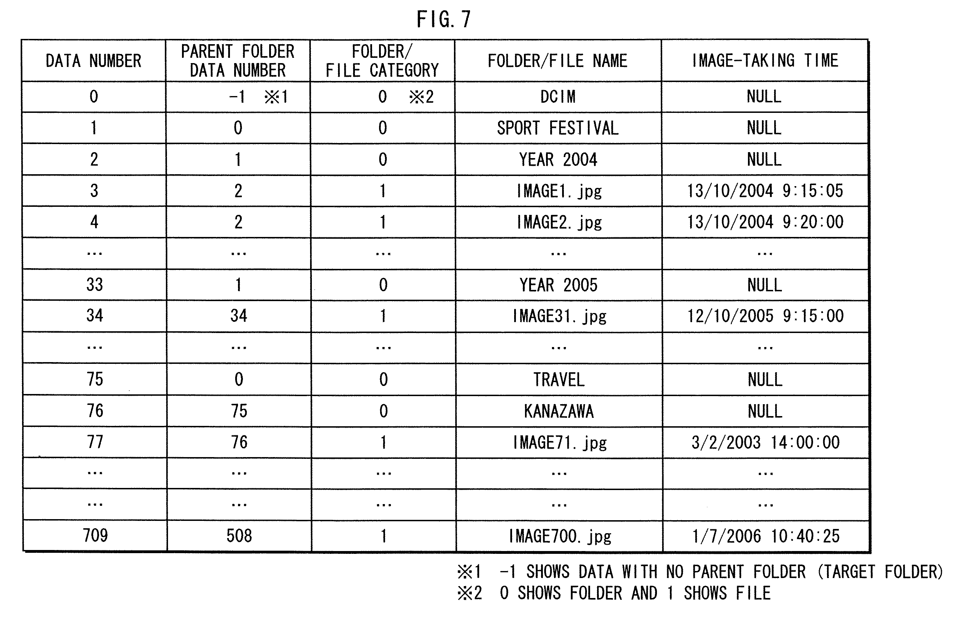

At the time of the slideshow information generation, the slideshow information generation unit 5 generates, when a excluding condition is set by the exclusion setting unit 4, slideshow list information minus the still image data in accordance with the excluding condition.
For example, in the case where the excluding condition is not set, the slideshow list generation unit 4 generates slideshow list information shown in FIG.7 when the "DCIM folder" is selected as a target folder in the folder tree shown in FIG.2.

A folder/file information acquisition unit 6 reads, from the recording medium 130, information about a folder and still image data below the target folder, when the slideshow list generation unit 5 generates the slideshow information. Then, the folder/file information acquisition unit 6 notifies the slideshow list generation unit 4 of the resultant information.
A slideshow list storage unit 7 holds the slideshow list information generated by the slideshow list generation unit 5.

The slideshow control unit 8 switches in order and displays, as a slideshow, in the display areas of each display-level folder, still image data which is shown, by the slideshow list information, to belong to a folder located below each display-level folder. For example, when the "DCIM folder" is selected as a target folder in the folder tree shown in FIG. 2, the slideshow control unit 8 displays, as shown in the upper part in FIG. 6, the slideshows of still image data from image 001 to image 070 in the display area of the "sport festival folder" and still image data from image 071 to image 700 in the display area of the "travel folder".

Also, when notified, from a selection folder determination unit 11, that a folder is selected during a slideshow execution, the slideshow control unit 8 displays the slideshow of the still image data in the folder on the display screen of the monitor 500 on the whole screen. For example, if the travel folder is selected while the image 300 is displayed during the execution of a slideshow in the display area of the travel folder, the slideshow of still image data from image 201 to image 400 is displayed on the whole screen, as shown in a lower part in FIG.6.

A still image data read unit 9 reads, from the recording medium 130, the still image data to be displayed for a slideshow.
A still image decoder 10 decodes the still image data read from the recording medium 130. At this time, when the still image data read is larger than the size of the display area to which the folder is allocated, the still image data read unit 9 even resizes the decoded data to the size of the display area which is allocated to the folder and then outputs the resultant data.

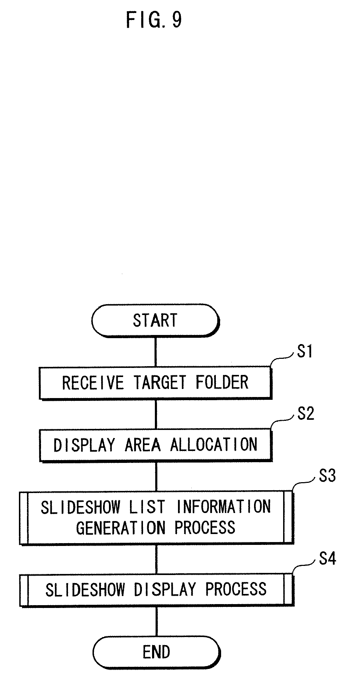

The selection folder determination unit 11 searches for, from the slideshow list information, a folder to which the still image data belongs, when any of folders to which the display area is allocated by the layout determination unit 3 is selected, the still image data being displayed during a slideshow at the time when the selection is received. Then the selection folder determination unit 11 notifies the slideshow control unit 8 of the folder. This concludes the description of the structure of the recording playback apparatus 100.
Next, control of viewer function by the control unit 118 is described. FIG.9 is a flowchart showing the processing procedure of the control unit 118.

Procedures executed in the control unit 118 are as follows: reception of the target folder in the input judging unit 2 (Step S1), allocation of the display areas to the display-level folders and a GUI display of the display-level folders in the layout determination unit 3 (Step S2), slideshow list information generation process in the slideshow list generation unit 5 (Step S3) and slideshow display process in the slideshow control unit 8 (Step S4).

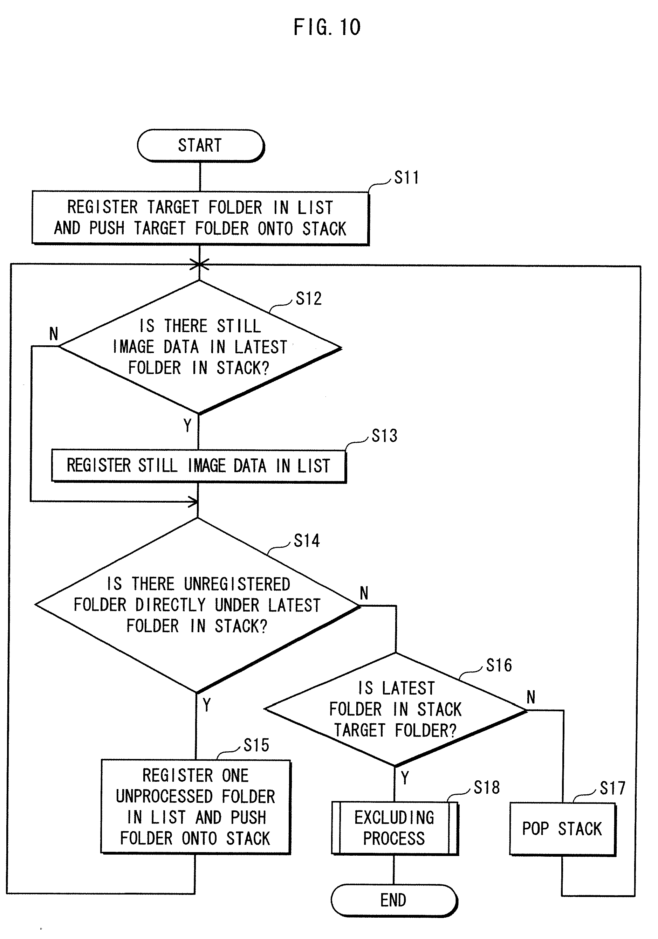

Hereinafter, the detail of the slideshow list information generation process executed in Step S3 is described. FIG.10 is a flowchart showing the processing procedure of the slideshow list information generation process.
Firstly, the slideshow list generation unit 5 registers, as a data number 0 in the slideshow list information, a target folder notified from the input judging unit 2 and pushes the folder name of the target folder onto a work stack register (Step S11) in the slideshow list information generation process.

Next, when the still image data is included in a folder whose folder name is registered most recently in the work stack register (Step S12: Yes), the slideshow list generation unit 5 registers, with the slideshow list information, all of the still image data included in this folder according to the image-taking time (Step S13) . Next, the slideshow list generation unit 5 judges whether or not the folder with its folder name registered most recently in the work stack register includes a folder which has not been registered with the slideshow list information (unregistered folder), (Step S14). Then if an unregistered folder is included (Step S14:Yes), the slideshow list generation unit 5 registers one of the unregistered folders at the bottom of the slideshow list information and then the folder name of this folder is pushed onto the work stack register (Step S15) . Next, the process of Step S12 to Step S15 is repeated. Then, the process is performed to the end of branches of the folder tree.

If any of folders has no unregistered still image data or folders below(Step S14: No), the slideshow list generation unit 5 judges whether or not the folder whose folder name is registeredmost recently in the work stack register is the target folder notified from the input judging unit 2 (Step S16). Then, if the folder with the folder name registered most recently in the work stack registers is not the target folder (Step S16: No), one piece of data from the work stack register is popped (Step S17). Then, the process of Step S12 to Step S15 is executed on folder located on the one level in the folder tree.

In the process of the Step S16, when the folder with its folder name registered most recently in the work stack register is the target folder (Step S16: Yes), the excluding process of the slideshow list information is executed in accordance with the excluding condition set in the exclusion setting unit 4 (Step S18).
By following the processing procedure of the above slideshow list information generation process, it is possible to generate, for every branch of the folder tree starting from the target folder, the slideshow list information where the folder and the still image data are registered successively.

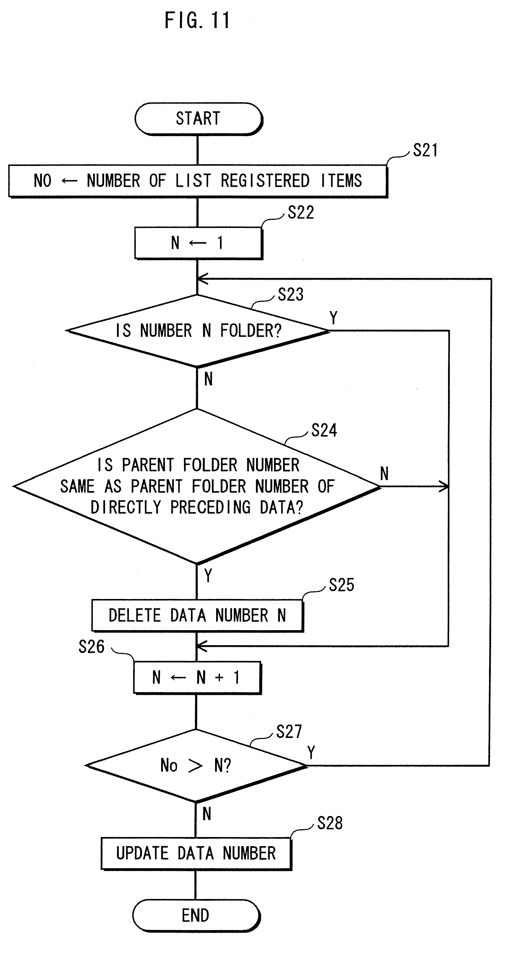

Next, detail of the excluding process executed in Step S18 is described. The excluding process is executed differently in accordance with the excluding condition set in the exclusion setting unit 4.
Firstly, the description is given of the excluding process when the excluding condition is set such that an image other than the folder representative image is excluded. FIG.11 is a flowchart showing the processing procedure of the excluding process that excludes an image other than the folder representative image.

In the excluding process of excluding an image other than the folder representative image, the slideshow list generation unit 5 first acquires a count of data items registered in the slideshow list information, then writes the count in a register NO (Step S21), and then set a register N to 1 (Step S22). Here, the register N is used for specifying one piece of data from the slideshow list information.
Next, in the slideshow list information, judgment executed in the slideshow list generation unit 5 are as follows: a judgment of whether or not the folder/file category of data whose data number is N is a folder (Step S23) and judgment of whether or not the parent folder number is the same as the parent folder number of directly preceding data (Step S24) . If the folder/file category of data whose data number is N is a file (Step S23: No) and the parent folder number is the same as the parent folder number of the directly preceding data (Step S24: Yes), the slideshow list generation unit 5 deletes the data of the data number N from the slideshow list information (Step S25).

Next, the slideshow list generation unit 5 increments the register N by one (Step S26) and if the number of registers N is greater than the value of the register N (Step S27: Yes), the process of Step S23 to Step S27 are repeated. If the value of the register N reaches the number of registered items N0 (Step S27: No), the slideshow list generation unit 5 re-numbers the data number of slideshow list information from 0 (Step S28) and then the process ends.

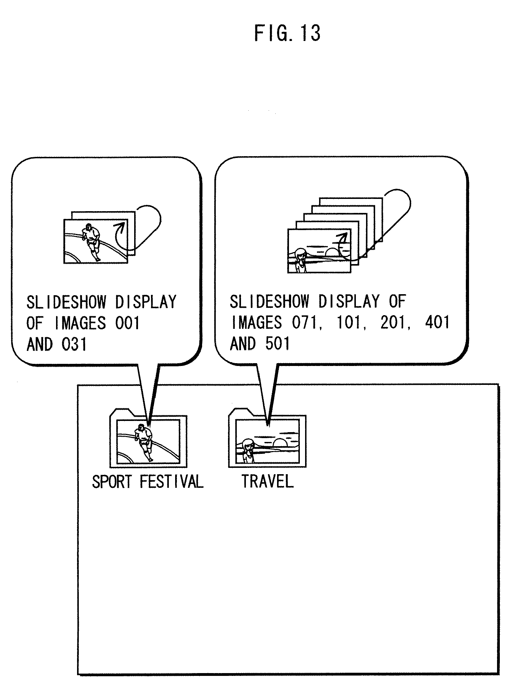

According to the above process, for example, it is possible to generate, for a folder including a plurality of still image data, the slideshow list information to which only one piece of the representative still image data is registered, when the "DCIM folder" is the target folder in the folder tree shown in FIG. 2. When a slideshow is executed using such slideshow list information, the slideshow of two images such as a image 001 in a year 2004 folder and a image 031 in a year 2005 folder are displayed, as shown in FIG.13, in the display areas of the sport festival folder. Also, as shown in FIG. 13, the slideshows of only 5 images such as an image 071 in a Kanazawa folder, an image 101 in a Hokkaido folder, an image 201 in an Okinawa folder, an image 401 in a Kumamoto folder and an image 501 in a Shikoku folder are displayed in the display area of the travel folder.

Thus, since a plurality of still image data included in the same folder are excluded leaving one image, a slideshow can be executed efficiently.
Also, an example is shown of selecting, of still image data included in the same folder, the still image data registered first in the list (i.e. the image-taking time is earliest), as the representative still image data. However, the representative still image data of the folder may be selected based on other criteria. For example, it is possible to decide the representative still image data for every folder by the selection of the user using a screen displaying the GUI of the folder tree. Furthermore, by saving the list of the representative still image as a file in the recording medium 13 0, it is not necessary for the user to select at every slideshow, making it possible to efficiently display the slideshow of the representative still image data desired by the user.

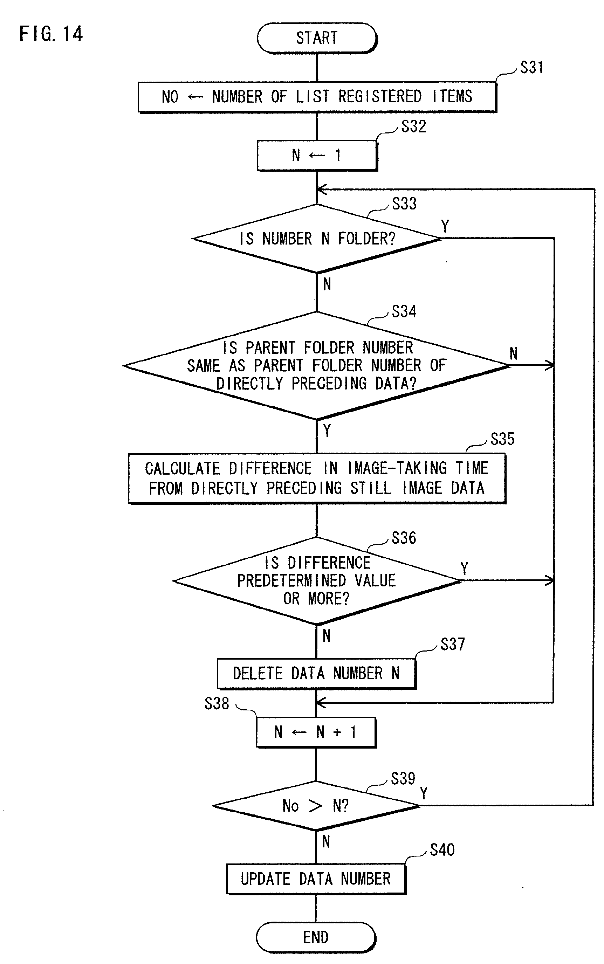

Next, the description is given of the excluding process when a setting is made such that pieces of still image data that are close in image-taking time are excluded. FIG.14 is a flowchart showing the excludingprocedure of excludingprocess based on the image-taking time.
The excluding process shown in FIG. 14 of excluding still image data that are close in image-taking time is the processing procedure of the excluding process which excludes an image other than the folder representative image shown in FIG.11 with the addition of the process of Step S35 and Step S36.

Step S35 is a process that calculates the difference between the image taking time of still image data and the image-taking time of directly preceding still image data in the order of registration in the slideshow list information. Step S36 is a process that judges whether or not the difference in the image-taking time calculated in Step S35 is more than or equal to a predetermined value (e.g. 10 seconds).
By executing such processing procedure, still image data whose folder/file category is a file (Step S33: No), whose parent folder number is the same as the parent folder number of the directlypreceding data (Step S34: Yes) and whose difference in the image-taking time from the directly preceding data is below the predetermined value (e.g. 10 seconds) (Step S36: No) is excluded from the slideshow list information.

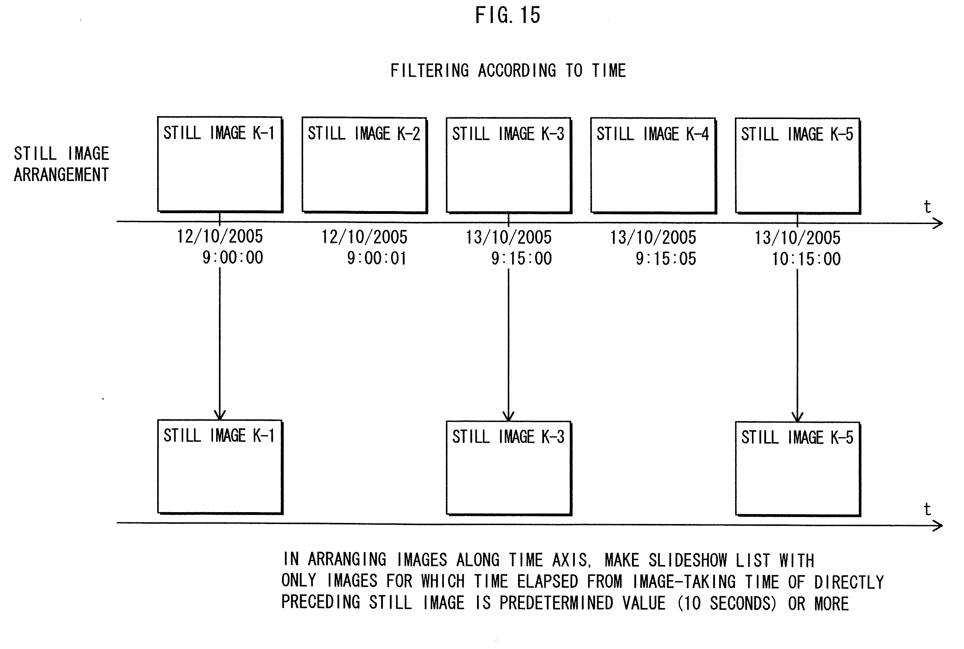

For example, as shown in FIG. 15, in the case of arranging still image data K-1, K-2, K-3, K-4 and K-5 included in a folder K along a time axis in order of image-taking time, only the still image data for which the time elapsed from the image-taking time of the directly preceding still image data is more than or equal to the predetermined value (e.g. 10 seconds) is registered in the slideshow list information. This results in k-2 and k-4 being excluded. As a result, a slideshow executed for the folder k automatically switches the still image data k-1, the still image data k-3 and the still image data k-5.

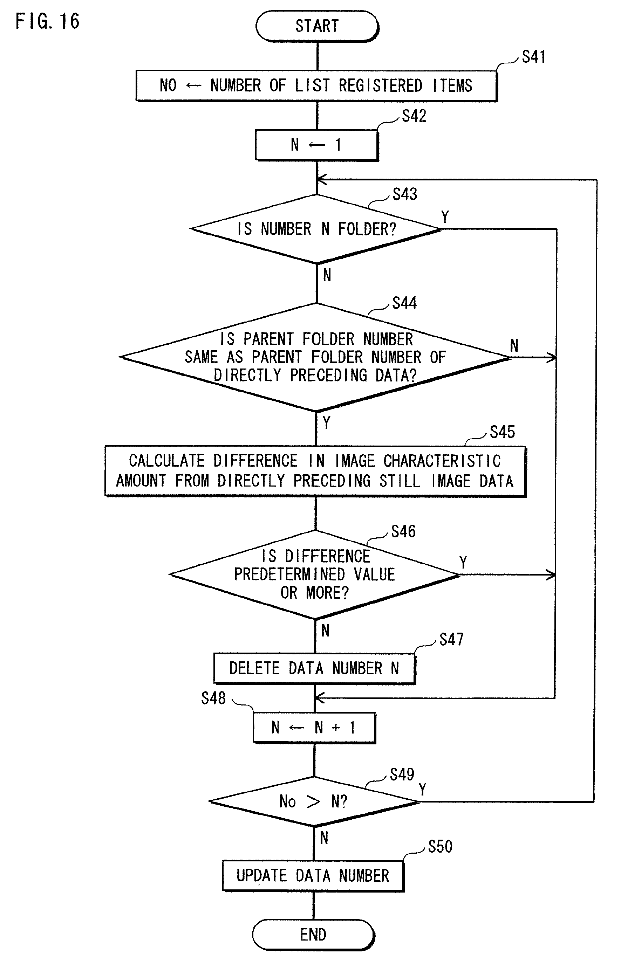

Accordingly, the slideshow of the still image data whose image-taking time is directly consecutive to another piece of still image data(less than 10 seconds) is not displayed. Therefore, the number of pieces of still image data decreases, which enables the user to confirm desired still image data even more rapidly.
Next, the description is given of the excluding process when a setting is made such that pieces of still image data whose image patterns are similar are excluded based on the characteristic amount determined by the image pattern of still image data. FIG.16 is a flowchart showing the processing procedure of excluding process based on the image characteristic amount.

The excluding process shown in FIG.16 of excluding still image data whose image pattern is similar is the processing procedure of excluding process which excludes an image other than the folder representative image shown in FIG.11 with the addition of the process of Step S45 and Step S46.
Step S45 is a process that calculates a difference in an image characteristic amount between the image pattern of still image data of the data number N and the image pattern of directly preceding still image data in the order of registration in the slideshow list information using an extraction method such as an edge/line characteristic extraction method, texture characteristic extraction method, color characteristic extraction method or the like. Step S46 is a process that judges whether or not the difference in the image characteristic amount calculated in Step S45 is more than or equal to a predetermined value.

The characteristic amount determined by the image pattern of still image data is calculated by a conventional extraction method, and it is judged whether or not the images are directly consecutive to another still image data by comparing the characteristic amount determined by the image pattern of still image data with the characteristic amount of directly preceding still image data in the slideshow list information.
Well-known extraction methods include the edge/line characteristic extraction method, the texture characteristic extraction method, the color characteristic extraction method and the like.

For example, the edge/line characteristic extraction method intensifies the edges and lines using a differential filter (e.g. Sobel, Prewitt, Roberts or the like) and Laplacian filter. This is because an image represented linearly by causing its edges and lines to stand out shows well the characteristics of the form of the object in the image. Also, the edge/line characteristic extraction method can compare two still images by the pixel to judge whether the variable amount is more than or equal to a specified value ornot. Also, according to the Sobel, the density of a central pixel is obtained by multiplying the density of each pixel on the periphery of the central pixel by a coefficient and then adding all of each resultant density. Also, the Sobel includes a smoothing operation and is **characterized by** its strength in noise unlike a general differential. Also, Prewitt uses, based on the same way of thinking as the Sobel, a coefficient different from the Sobel. Also, the Roberts gives the gradient of density variation and is effective especially in detecting a diagonal edge. Also, the Laplacian filter makes it possible to intensify without depending on an edge direction.

Other than that, it is possible to compare two still images to judge the size of variable amount, by using a histogram or a binary process that converts a quantified image to the density of "0" or "1".
By executing the above processing procedure shown in FIG.16, the still image data whose folder/file category is a file (Step S43: No), whose parent folder number is the same as the parent folder number of the directly preceding data (Step S44: Yes) and whose difference in the characteristic amount from the directly preceding data is below the predetermined value (Step S46: No) is excluded from the slideshow list information.

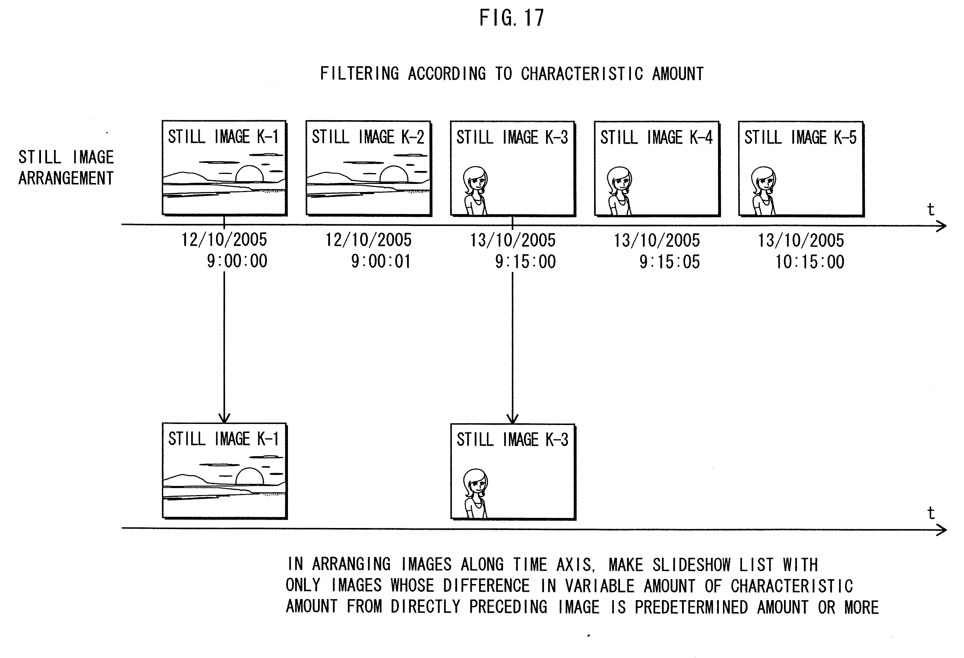

For example, as shown in FIG.17, the still image data K-2, K-4, and K-5 are excluded, in the case of (i) arranging still image data K-1, K-2, K-3, K-4 and K-5 included in a folder k along a time axis in order of image-taking time, and (ii) making a slideshow list only with pictures whose variable amount of the characteristic amount which is determined by the image pattern of directly preceding still image data is more than or equal to a certain value.

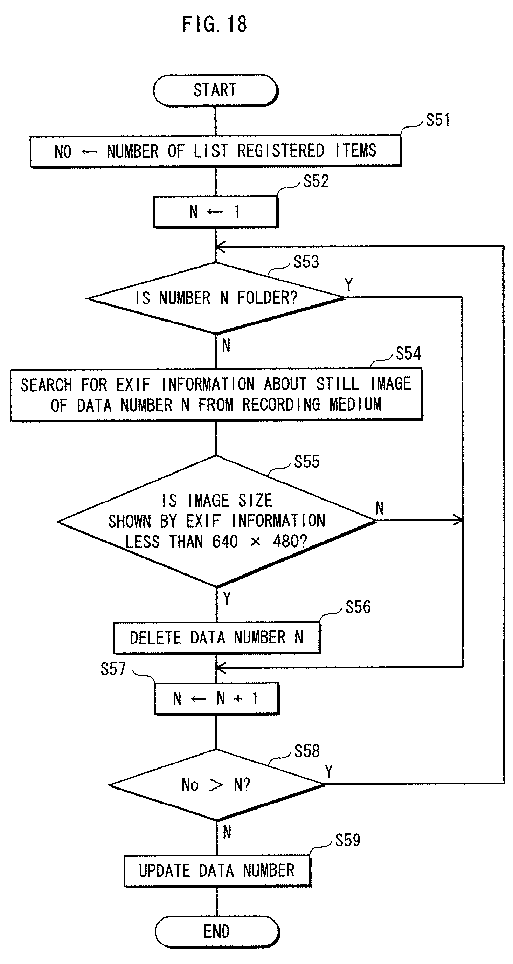

Accordingly, the slideshow of the still image data whose image pattern is directly consecutive to another still image data is not displayed. Therefore, the number of pieces of still image data decreases, which enables the user to confirm desired still image data even more rapidly.
Next, an excluding process using Exif information is described. Some of still image data taken by the DSC are embedded, as Exif (Exchangeable, image file format) information, withmeta-information such as conditions of the shooting and the like. By using such Exif information, it is possible to exclude still image data whose image size, place at which the image was taken, type of the DSC used for the shooting and the like do not satisfy a predetermined condition. FIG.18 is a flowchart showing the processing procedure of excluding process using the Exif information.

In the excluding process using the Exif information, firstly the slideshow generation unit 5 acquires the count of data items registered in the slideshow list information. Then the slideshow generation unit 5 writes the acquired count in the register N0 (Step S51) and then sets "1" in the register N which is used to specify one piece of data from the slideshow list information (Step S52).
Next, the slideshow list generation unit 5 judges whether or not the folder/file category of data whose data number is N in the slideshow list information is a folder (Step S53). If the folder/file category of the data whose data number is N is a file (Step S53:Yes), the slideshow list generation unit 5 reads out Exif information of the still image data of the data number N from the recording medium 130 (Step S54) .If the image size shown by this Exif information is below a predetermined size (e.g. 640 pixels x 480 pixels) (Step S55: Yes), the slideshow list generation unit 5 deletes the data of the data number N from the slideshow list information (Step S56).

Next, the slideshow list generation unit 5 increments the register N by one (Step S57). If the number of registered items N0 is greater than the value of a register N (Step S58: Yes), the process of Step S53 to Step S58 is repeated. When the value of the register N reaches the number of registered items N0 (Step S58 : No), the slide show list generation unit 5 re-numbers the data number of slideshow list information from 0 (Step S59) and then ends the process.

According to the above process, still image data whose image size is smaller than a predetermined image size is excluded from the slideshow list information.
It is anticipated that the user will use a large image size to photograph objects of interest or importance to the user, and therefore, on the other hand, it is anticipated that still image data taken using a small image size is not considered important by the user. Thus, since still image data having a small size, below 640 pixels x 480 pixels, is not displayed in the slideshow, the user can confirm the desired still image data even more rapidly.

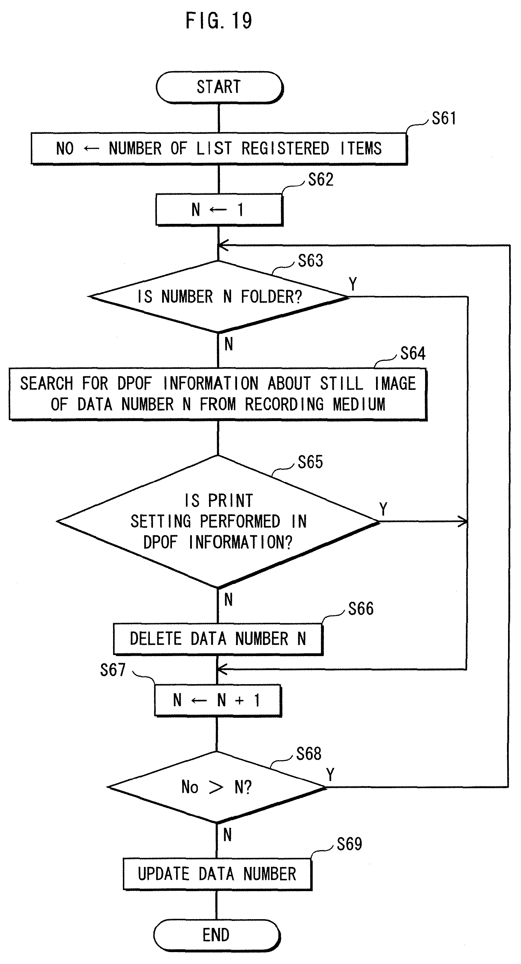

Also, the excluding process is performed here such that, of information shown by the Exif information, the image size is a condition. However, it is possible to exclude the still image data using some other information shown by the Exif information as a condition.
Next, excluding process using the DPOF information is described. The DPOF information is sometimes recorded on the recording medium for specifying, from the still image data recorded on the recording medium, images that the user wants to print out and the number of images that are to be printed. FIG.19 is a flowchart showing the processing procedure of excluding process using the DPOF information.

The excluding process using DPOF information shown in FIG.19 is the excluding process using Exif information of FIG.18, with the processing of Step 54 and Step 55 replaced with the process of Step S64 and Step S65.
Step S64 is a process that reads the DPOF information of the still image data of the data number N from the recording medium 130. Step S65 is a process that judges whether or not printing of the still image data of the data number N is instructed in the DPOF information.

By executing such processing procedure, still image data for which printing is not instructed in the DPOF information is excluded from the slideshow list information. Here, since the still image data for which printing is not instructed are images that the user has focused on, it is highly possible that the still image data directly shows the content of the folder.
Accordingly, the slideshow of still image data for which printing is not instructed is not displayed. Therefore, the number of pieces of still image data decreases and it is possible for the user to confirm the desired image even more rapidly.

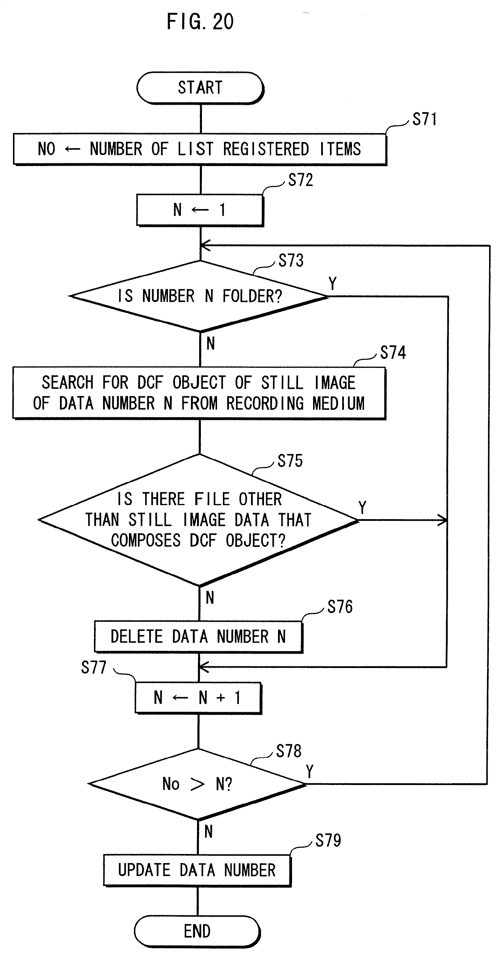

Next, an excluding process based on whether or not files exist that compose a DCF object is described. The DCF standard defines that a piece of still image data and a file whose file name differs only in terms of the extension from the file name of the piece of still image data together compose a DCF object. FIG.20 is a flowchart showing the processing procedure of the excluding process based on whether or files exist that composes the DCF object.

The excluding process using DPOF information shown in FIG. 20 is the excluding process using Exif information of FIG.18, with the processing of Step 54 and Step 55 replaced with the process of Step S74 and Step S75.
Step S74 is a process that searches for a file that composes the DCF object together with the still image data of the data number N in the recording medium 130. Step S75 is a process that judges whether or not the file that composes such DCF obj ect has been detected.

By executing such processing procedure, still image data having no file composing a DCF object is excluded from the slideshow list information.
Here, it is anticipated that a still image data composing a DCF object will be important. Accordingly, although the still image data which has a file composing a DCF object and is anticipated to be important is displayed in a slideshow, still image data having no file that composes a DCF object is not displayed in the slideshow. Therefore, the number of pieces of still image data decreases, which enables the user to confirm even more rapidly the still image data anticipated to be important.

Also, one type of files that may compose a DCF object is a thumbnail file which is a reduced-size image used in an index, and has an extension ".THM". As an example of other excluding process using the DPOF information, it is possible to set an excluding condition such that still image data for which no thumbnail exists is excluded. Thus, by excluding, from the slideshow, still image data for which a thumbnail has not been prepared in advance, it is possible to reduce processing load necessary for resizing a still image for a slideshow.

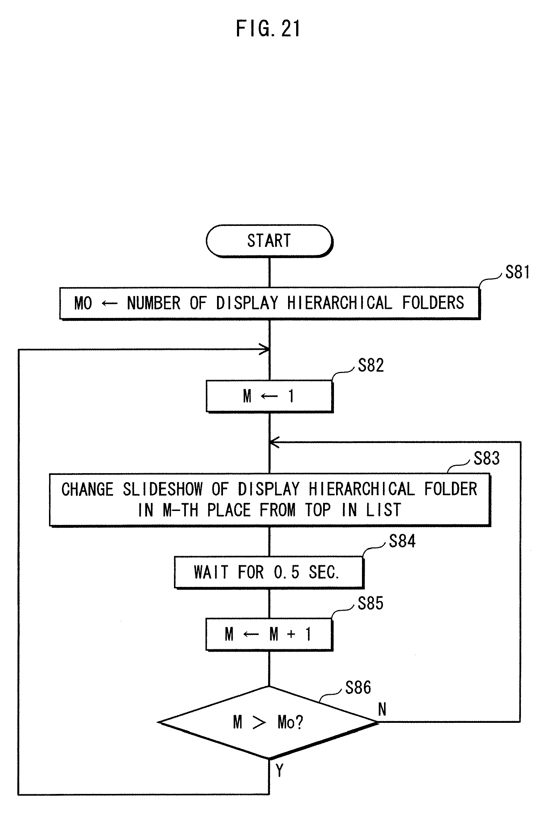

This concludes the description of the detail of the slideshow list information generation process.
Next, the detail of a slideshow display process executed in Step S4 in FIG. 9 is described. FIG. 21 is a flowchart showing a processing procedure of a slideshow display process.
In the slideshow display process, the slideshow control unit 8 first acquires the number of display-level folders by counting the number of parent folders whose numbers are 0 in the slideshow list information. Then the slideshow control unit 8 writes the acquired number in a register M0 (Step S81) and sets "1" in a register M which is used for specifying one display-level folder (Step S82).

Next, the slideshow control unit 8 switches one image of the slideshow in the display area allocated to a display-level folder that is in an M-th place from the top in the slideshow list information (Step S83). Then the slideshow control unit 8 waits for 0.5 seconds (Step S84) and increments the register M by one (Step S85). Then the slideshow control unit 8 judges whether the value of the register M exceeds the number of display-level folders M0 (Step S86).

If the value of the register M does not exceed the number of display-level folders M0 in Step S86 (Step S86: No), the slideshow control unit 8 repeats the process of Step S83 to Step S86 and then changes one piece of images for the slideshow in the display area allocated to next display-level folder.
If the value of the register M exceeds thenumberof display-level folders Mo in Step S86 (Step S86: Yes), the slideshow control unit 8 returns to the process of Step S82. Then the slideshow control unit 8 repeatedly switches the image being displayed from the first display hierarchy folder in the slideshow.

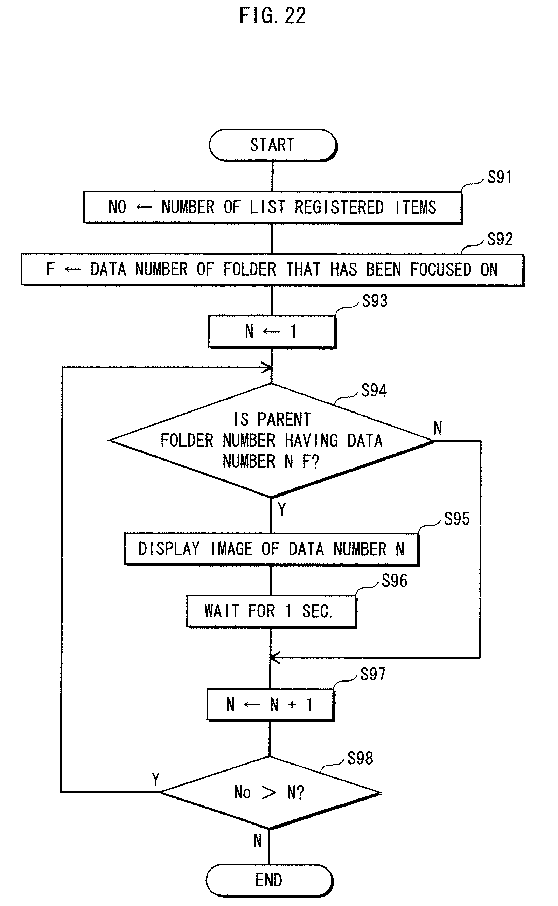

According to the above process, when display areas of a plurality of display-level folders are allocated in the display screen of the monitor 500, slideshows are repeatedly executed concurrently in the plurality of display areas. However, the timing of switching images in each slideshow executed in each display area does not coincide.
Also, slideshows do not necessarily have to be executed concurrently in the plurality of display areas. For instance, a slideshow may be executed using only a display-level folder being focused on. FIG.22 is a flowchart showing the modification of the slideshow display process executing the slideshow of only the folder that has been focused on.

In the slideshow display process that executes the slideshow of only the folder that has been focused on, the slideshow control unit 8 first acquires the count of data items registered in the slide show display list information. Then the slideshow control unit 8 writes the acquired count to the register N0 (Step S91), writes, to a register F, the data number of the folder being focused on in the slideshow list information (Step S92) and set "1" in the register N which is used for specifying one piece of data from the slideshow list information (Step S93).

Next, the slideshow control unit 8 judges whether or not the data number of the parent folder of the data of the data number N in the slideshow list information is the same as the value of the register F (Step S94). If the data number of the parent folder of the data of the data number N is the same as the value of the register F (Step S94: Yes), the still image data of the data number N is displayed in the display area allocated to the folder being focused on (Step S95). The slideshow control unit 8 wait for one second (Step S96) before incrementing the register N by one (Step S97) and then judges whether or not the number of registered items N0 is greater than the value of the register N (Step S98). If the number of registered items N0 is greater than the value of the register N (Step S97: Yes), the slideshow control unit 8 repeats the process of Step S94 to Step S98. Then if the value of the registerN reaches the number of registered items N0 (Step S98: No), the process ends.

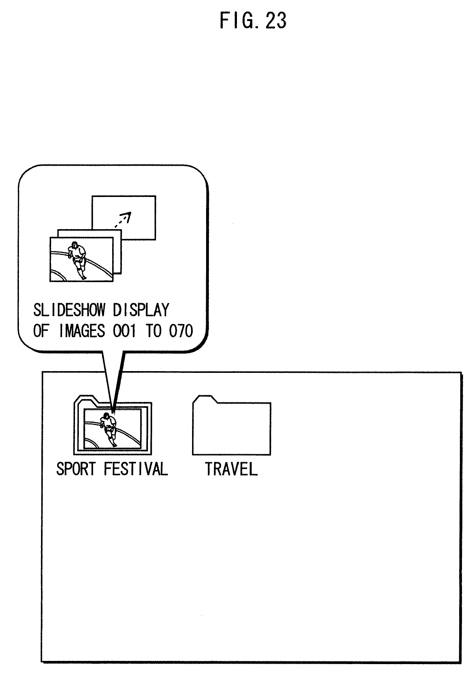

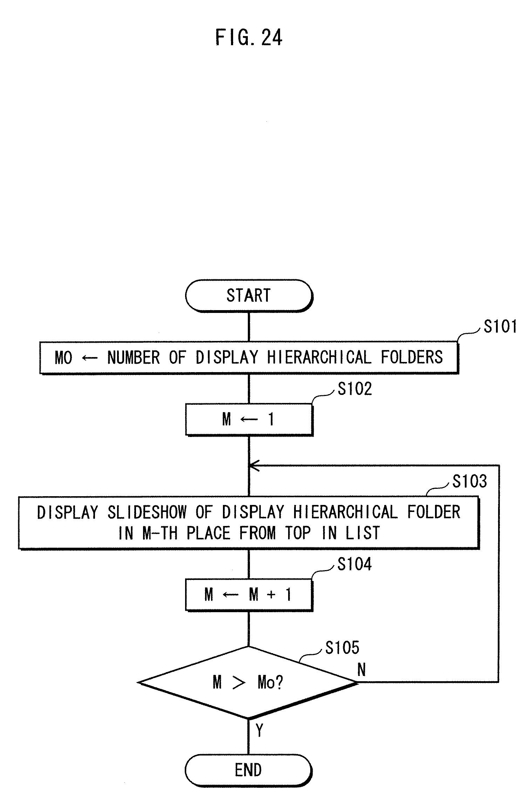

According to the above process, a slideshow is executed in the allocated area of the folder that has been focused on. For example, when the "sport festival folder" is focused on in the slideshow list information generated as shown in FIG. 7, the slideshow of still image data from image 001 to image 070 is displayed in the display area of the sport festival folder as shown in FIG.23.
Next, another modification of a slideshow display process is described. FIG.24 is a flowchart showing the processing procedure of a modification of a slideshow display process.

In the slideshow display process shown in FIG. 24, the slideshow control unit 8 first acquires the number of display-level folders by counting the number of folders whose parent folder number is 0 in the slideshow list information. Then the slideshow control unit 8 writes the acquired number in the register M0 (Step S101) and then set "1" in the register M which is used for specifying one display-level folder (Step S102).

Next, a slideshow is executed so as to cycle through the still image data included in this display-level folder in the display area allocated to the display-level folder in the M-th place from the top in the slideshow list information (Step S103). This Step S103 is processing procedure that executes the processing procedure of Step S91 to Step S98 in FIG.22 with respect to the display-level folder that is in M-th place.

Next, the slideshow control unit 8 increments the register M by one (Step S104) and then judges whether or not the value of the register M exceeds the number of display-level folders M0 (Step S105).
If the value of the register M does not exceed the number of the display-level folder M0 (Step S105 : No), the slideshow control unit 8 repeats process form Step S103 to Step S105. Then the slideshow control unit 8 executes a slideshow so as to cycle through the still image data in the display area allocated to the next display-level folder.

When the value of the register M exceeds the number of display-level folders M0 in Step S105 (Step S105: Yes), the process ends.
According to the above process, if the display areas of a plurality of the display-level folders are allocated to the display screen of the monitor 500, a slideshow is executed so as to cycle through the still image data included in this display-level folder in the display area of any one of display-level folders. Then when the slideshow is completed, a slideshow is executed in the display area of another display-level folder.

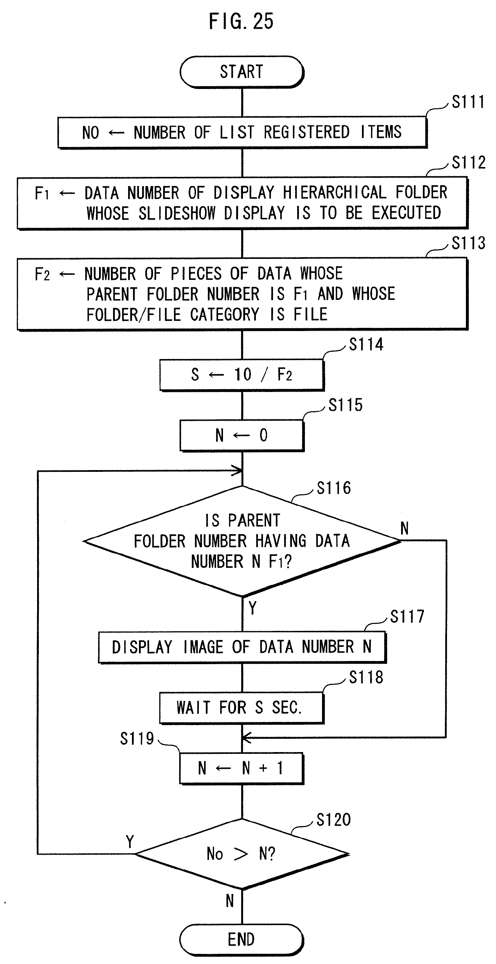

This concludes the description of the modification of the slideshow display process.
Next, a description is given of a modification of the slideshow display process that determines display time per image in accordance with the number of pieces of still image data. FIG.25 is a flowchart showing modification that determines the display time per image in accordance with the number of pieces of still image data whose slideshow is to be displayed.
In the slideshow display process shown in FIG. 25, the slideshow control unit 8 first acquires the count of data items registered in the slideshow list information and writes the acquired count in the register N0 (Step S111). Then the slideshow control unit 8 writes, in the register F1, the data number of the display-level folder whose slideshow is to be executed in the slideshow list information (Step S112). Furthermore, the slideshow control unit 8 counts the number of pieces of still image data whose data number of the parent folder is the value of a register F1 in the slideshow list information and then writes the value in the register F2 (Step S113). Furthermore, the slideshow control unit 8 writes, in a register S, a quotient obtained by dividing a predetermined time (e.g. 10 seconds) by the value of the register F2 (Step S114) and then sets "1" in the register N, the register N being used for specifying a piece of the data from the slideshow list information (Step S115).

Next, the slideshow control unit judges whether or not the data number of the parent folder of the data of the data number N in the slideshow list information is the same as the value of the register F1 (Step S116). If the data number of the parent folder of the data of the data number N is the same as the value of the register F1 (Step S116: Yes), the slideshow control unit 8 displays the still image data of the data number N in the display area allocated to the display-level folder of the data number F1 (Step S117). The slideshow control unit 8 waits for a period of time shown in the register S (Step S118) before incrementing the register N by one (Step S119) and then judges whether or not the number of registered items N0 is greater than the value of the register N (Step S120). If the number of registered items N0 is greater than the value of the register N (Step S120: Yes), the slideshow control unit 8 repeats the process of Step S116 to Step S120. Then when the value of the register N reaches the number of registered items N0 (Step S120: No), the process ends.

According to the above process, a control is made such that a slideshow in the display area allocated to one display-level folder cycles through in a predetermined time period (here, 10 seconds) regardless of how many pieces of still image data exist in the folder below the display-level folder.
This concludes the description of the modification of the slideshow display process that determines the display time per image in accordance with the number of pieces of still image data.

Also, in the present embodiment, when a selection operation is performed during a slideshow, a full-screen slideshow is performed of the still image data in the folder that includes the still image data that was being displayed when the selection operation was performed. However, the present invention may execute another process as the process when the selection operation is performed during the slideshow.
For example, as a process when the selection operation is performed during a slideshow, a folder including the still image data displayed at the time of the selection operation may be a new target folder and the following may be executed: display area allocation to the display-level folder pertaining to the new target folder, generation of the slideshow list information pertaining to the new target folder, and a slideshow based on the slideshow list information pertaining to the new target folder.

### (Other modifications)

Also, although the present invention is described based on the above embodiment, the present invention is by no means limited to the above embodiment. The following cases are included in the present invention.

(1) The present invention may be a slideshow display method that the processing procedure of the flowcharts described in the embodiments discloses. Also, the present invention may be a computer program including program codes that have a computer operate following the processing procedure or may be a digital signal formed from the computer program.
Also, the present invention may be a computer-readable recording medium such as a flexible disk, a hard disk, a CD-ROM, an MO, a DVD, a DVD ROM, a BD (Blu-ray Disc) or a semiconductor memory, that stores the computer program or the digital signal.

Also, the present invention may be the computer program or the digital signal transmitted on an electronic communication network, a wireless or wired communication network, a network of which the Internet is representative, or a data broadcast.
Also, by recording and transferring the computer program or digital signal on the recording medium or by transferring the computer program or digital signal via the network or the like, the present invention may be implemented by another independent computer system.

(2) The present invention may be implemented as an LSI that controls the viewer apparatus of the above embodiment. Such LSI can be realized by accumulating each function block of the screen display unit 1, the input judging unit 2, the layout determination unit 3, the exclusion setting unit 4, the slideshow list generation unit 5, the folder/file information acquisition unit 6, the slideshow list storage unit 7, the slideshow control unit 8, the still image data read unit 9, the still image decoder 10 and the selection folder determination unit 11. These function blocks may be realized separately as individual chips or part or all may be included on one-chip.

Although the system is called "LSI" here, the LSI may be called "IC", "system LSI", "super LSI" or "ultra LSI", depending on differences in an integrated level.
Also, a technique of making integrated circuits is not limited to the technique of the LSI. Therefore, the integrated circuit may be realized by a dedicated circuit or a multipurpose processor. The FPGA (field programmable gate array) capable of being programmed after the production of the LSI or a reconfigurable processor capable of restructuring the connection and setting of circuit cells inside the LSI may be used.

Furthermore, if technology of creating the integrated circuit that replaces the LSI appears due to the advance of semiconductor technology or other deriving technology, naturally, function blocks may be accumulated using the technology. An application of biotechnology and the like are possible.
(3) It is also possible to provide a combination of any of the embodiments and modifications described above.

### Industrial Applicability

The viewer apparatus and the slideshow display method pertaining to the present invention are useful as technology that searches for an image efficiently us inga slideshow, and are applicable to a personal computer, a recording playback apparatus or the like that may perform a slideshow on a monitor.

## Claims

1. A viewer apparatus that displays, on a display screen, a slideshow of a plurality of pieces of still image data below a target folder, the target folder being any of folders in a hierarchical file system inwhich folders and still image data are organized into a tree structure on the recording medium, the viewer apparatus comprising:
a display area allocation unit operable to allocate a display area, on the display screen, to each display-level folder directly one level below the target folder;
a selection unit operable to select, as slideshow targets, a plurality of pieces of still image data that belong to a display-level folder and one or more subordinate folders which are one or more levels below the display-level folder, the display-level folder being present in a path of each of the subordinate folders; and
a slideshow control unit operable to execute, in a display area allocated to the display-level folder, a slideshow of the plurality of pieces of selected still image data.

2. The viewer apparatus of Claim 1, wherein
when two or more slideshows are executed in two or more display areas, the execution of the slideshow is performed such that (i) timing that still image data in one slideshow is switched and (ii) timing that still image data in another slideshow is switched do not coincide.

3. The viewer apparatus of Claim 1, wherein
the slideshow control unit controls so as to start the slideshow in the display area allocated to the display-level folder after a slideshow in another display area allocated to another display-level folder on the display screen is completed.

4. The viewer apparatus of Claim 1, further comprising:
a calculation unit operable to calculate a difference in image-taking time between two pieces of still image data that belong to a same folder; and
an excluding unit operable, when the calculated difference is less than a predetermined value, to exclude one of the two pieces of the still image data from the slideshow target.

5. The viewer apparatus of Claim 1, further comprising:
a calculation unit operable to calculate a difference in characteristic amount between two pieces of still image data that belong to a same folder, the characteristic amount being determined according to image patterns of each of the two pieces of the still image data; and
an excluding unit operable, when the calculated difference is less than a predetermined value, to exclude one of the two pieces of the still image data from the slideshow target.

6. The viewer apparatus of Claim 1, further comprising:
an excluding unit operable to exclude, fromtheslideshowtarget, still image data that does not satisfy a predetermined condition, based on meta-information attached to the still image data.

7. The viewer apparatus of Claim 1, further comprising:
an excluding unit operable to exclude, fromtheslideshowtarget, still image data not specified as a print target in print specification information recorded on the recording medium.

8. The viewer apparatus of Claim 1, further comprising:
an excluding unit operable to exclude, from the slideshow target, still image data that belongs to a folder in which a file does not exist that composes a DCF object together with the still image data.

9. The viewer apparatus of Claim 1, further comprising:
an excluding unit operable to exclude, from the slideshow target, of a plurality of pieces of still image data that belong to a same folder, still image data other than still image data whose image-taking time is earliest.

10. The viewer apparatus of Claim 1, further comprising:
an excluding unit operable to exclude, from the slideshow target, of a plurality of pieces of still image data that belong to a same folder, still image data other than still image data which is specified by a user.

11. The viewer apparatus of Claim 1, further comprising:
a reception unit operable to receive selection operation from a user during the execution of the slideshow by the slideshow control unit; and
a target folder change unit operable to set, as a new target folder, a folder to which still image data belongs that is displayed in the slideshows at the time of receiving the selection operation, wherein
the display area allocation unit, the selection unit and the slideshow control unit execute, when the target folder is changed, for the new target folder, allocation of the display area to each display-level folder, selection of the slideshow targets, and the slideshow, respectively.

12. The viewer apparatus of Claim 1, further comprising:
a reception unit operable to receive selection operation from a user during the execution of the slideshow performed by the slideshow control unit; and
a full screen slideshow control unit operable (i) to select a folder to which a piece of still image data belong that is displayed in the slideshows at the time of receiving the selection operation and (ii) to execute, on the whole display screen, a slideshow of a plurality of pieces of still image data that belong to the selected folder.

13. The viewer apparatus of Claim 1, further comprising:
a reception unit operable to receive, of the display-level folders, at least one selection of the display-level folder if the slideshow area allocation unit allocates display areas to a plurality of display-level folders, wherein
the slideshow control unit executes the slideshows in the display areas allocated to the selected display-level folders.

14. The viewer apparatus of Claim 1, wherein
the slideshow control unit determines display time per image for the slideshow in a display area allocated to a predetermined display-level folder in accordance with a number of pieces of still image data to be the slideshow targets in the display area.

15. Aslideshowdisplaymethod used inaviewer apparatus that displays, on a display screen, a slideshow of a plurality of pieces of still image data below a target folder, the target folder being any of folders in a hierarchical file system in which folders and still image data are organized into a tree structure on the recording medium, the slideshow display method comprising:
a display area allocation step of; allocating a display area, on the display screen, to each display-level folder directly one level below the target folder
a selection step of selecting, asslideshowtargets, a plurality of pieces of still image data that belong to a display-level folder and one or more subordinate folders which are one or more levels below the display-level folder, the display-levelfolder beingpresent in a path of each of the subordinate folders; and
a slideshow control step of executing, in a display area allocated to the display-level folder, a slideshow of the plurality of pieces of selected still image data.

16. A program for displaying, on a display screen, a slideshow of a plurality of pieces of still image data below a target folder, the target folder being any of folders in a hierarchical file system in which folders and still image data are organized into a tree structure on the recording medium, the program comprising:
a display area allocation step of; allocating a display area, on the display screen, to each display-level folder directly one level below the target folder
a selection step of selecting, as slideshowtargets, a plurality of pieces of still image data that belong to a display-level folder and one or more subordinate folders which are one or more levels below the display-level folder, the display-level folder being present in a path of each of the subordinate folders; and
a slideshow control step of executing, in a display area allocated to the display-level folder, a slideshow of the plurality of pieces of selected still image data.
